# EUROPEAN PATENT SPECIFICATION

(11) **EP 3 818 353 B1**
(45) Date of publication and mention of the grant of the patent: **11.09.2024**
(21) Application number: 19736581.0
(22) Date of filing: 01.07.2019
(51) Int. Cl.: G01M 3/38, G01M 3/22, G01M 3/24

(54) **GAS LEAK DETECTOR AND A METHOD FOR GAS LEAK DETECTING**
GASLECKDETEKTOR UND VERFAHREN ZUR GASLECKDETEKTION
DÉTECTEUR DE FUITE DE GAZ ET PROCÉDÉ DE DÉTECTION D'UNE FUITE DE GAZ

(30) Priority: 06.07.2018 DK PA201870467
(43) Date of publication of application: 12.05.2021
(73) Proprietor: Makeen Gas Solution A/S, 8940 Rander SV (DK)
(72) Inventor: BECQ, Olivier, 8940 Randers (DK); NIELSEN, Bent Lindrup, 8920 Randers NV (DK); JENSEN, Lasse Lund, 8541 Skødstrup (DK)
(74) Representative: Plougmann Vingtoft a/s
(86) International application number: PCT/DK2019/050210
(87) International publication number: WO 2020/007428

(56) References cited:
- BE-A- 746 067
- FR-A1- 2 458 064
- FR-A1- 2 458 064
- FR-A1- 2 522 820
- FR-A1- 2 785 049

## Description

### FIELD OF THE INVENTION

The invention relates to a gas leak detector, and in particular to a gas leak detector for detecting a leak of gas, such as a liquefied petroleum gas, from a gas container, such as a LPG gas cylinder.

### BACKGROUND OF THE INVENTION

Filling of containers with one or more gases is a common task of packaging gas e.g. for transportation or storage purposes. Within the field of filling containers with gas, such as liquid petroleum gas - also known as LPG, filling systems and/or transport systems with turntables and carousels are often used.

In order to ensure that the gas containers do not leak, one or more gas leak detectors are normally provided in such systems. In case a leak of gas from a gas container is detected, this particular container will be sorted out either automatically or manually. Due to the fire and/or explosion hazard in such environment all operation is provided in a secured way among others to prevent any sparks to occur.

These types of gas filling systems with leak detection are used for filling and leak detecting several hundreds or even thousands of containers per hour with LPG.

FR2785049 discloses gas bottles which arrive on a platform 1 and are positioned 3 on axis ZZ. A bell 6 covers the head of the bottle and after air rinsing 10, 62, further air and any gas is passed through a valve 19 to an infrared absorption analyzer 141. Finally the valve is opened and a pressure depression draws the remaining air and gas through the analyzer. An electronic unit 142 interprets the results and signals a module 5 which controls the subsequent bottle path.

FR 2764978 discloses a system for detecting gas leakage from a gas cylinder and valve and includes a mobile cover which is intended to encase the valve assembly. An infrared sensor is provided which is sensitive to the presence of the gas contained within the cylinder. This is connected to a pipe which leads from the cover which surrounds the valve assembly, enabling the gas within the cover to be sampled. Beyond the infrared detector there is a device to force gas through the pipe, from the mobile cover, past the infrared sensor and out into the atmosphere. The diameter of at least part of the transfer pipe is reduced in order to ensure a speed of gas flow in excess of 10 metres per second. A pipe diameter of 5mm or less may be chosen to achieve a gas flow speed of 20 to 70 metres per second. FR2458064 discloses a gas leak detector for detecting a leak of gas from a gas container valve unit.

Gas leak detection systems where a leak of the pressurised gas inside a gas cylinder and to the outside is detected as follows are also known. A leak of gas is detected by moving at least a main part of the cylinder through a water bath and detecting if any bobbles occur, the bobbles being caused by a leak of gas. Among others, since a certain flow of cylinders is needed through such water bath, such as e.g. 1200-8400 cylinders per hour, it may be difficult to detect which gas cylinder has a leakage. Typically, leakage detected with these water baths are leakages through openings in the material of the cylinder walls and/or through welds in the cylinder, such as due to corrosion in the lower end of the cylinder.

It has been found that the prior art systems do not ensure that any leaking gas containers are detected in due time, while factors such as filling and leak detecting capacity of such systems are also considered.

The inventors of the present invention have appreciated that an improved gas leak detector and method of detecting a gas leak is of benefit, and have in consequence hereof devised the present invention.

### SUMMARY OF THE INVENTION

It may be seen as an object of the present invention to provide an improved gas leak detector and method of detecting a leak of gas. Preferably, the invention alleviates, mitigates or eliminates one or more of the above or other disadvantages singly or in any combination.

According to the invention, a gas leak detector is provided for detecting a leak of gas from
- a first type of leak of gas, such as from a gas container valve unit and/or
- a second type of leak of gas, such as between the gas container valve unit and the gas container and/or
- a third type of leak of gas, such as through a wall or a welding of the gas container,

the gas-leak detector comprises
   - a housing which can be moved relatively to an external surface so as at least partly to surround the gas container valve unit, where the housing comprises means for providing a substantially closed connection between the housing and the external surface when the housing is moved relatively to the external surface in order to form a substantially closed space within the housing, wherein the substantially closed space is a space where a gas may possibly be forced into, but where any gas is substantially not allowed to or able to exit, and
   - detection means for detecting the first and/or the second and/or the third leak of gas and the detection means is provided in the substantially closed space in the housing while any leak of gas remains within the substantially closed space, and
wherein the gas leak detector further comprises
   - an air flow generator, such as a single fan, for providing and moving a mixture of air and any leak of gas within the substantially closed space.

Thus, an improved gas leak detector is provided. A possible advantage by providing the gas leak detector as described herein is that any leaking gas containers can be detected in due time, while the leak detecting capacity can even also be improved when compared to known systems.

The air flow generator is by the air flow providing a mixture of existing air in the substantially closed housing and gas leak - if any gas leak occurs - within the substantially closed space. Hereby, an amount of leaked gas will be part of the mixture and thus cannot 'hide' within the housing.

In particular, it is of benefit, when the mixture of air and any leak of gas within the substantially closed space is moved past the detection means by the air flow generator.

It may alternatively or additionally be seen as an advantage of the invention, which is based on the insight disclosed hereby, that the described solution improves detection since no air for creating turbulence inside the housing is added from the outside. Such air may decrease concentration of gas leak inside the housing and/or may even force at least part of a leak out of the housing.

The substantially closed space means herein a space where a gas may possibly be forced into, but where any gas is substantially not allowed to or able to exit under normal circumstances. A gas forced into the substantially closed space may e.g. be the gas itself being forced out of the gas container, due to the pressure in the gas container, but it may additionally or alternatively be a relative little quantity of air such as cleaning or purging air, which has not yet been shut off.

It is to be understood that the detection means may include means for emitting and/or receiving light, such as infrared light, and/or sound signals, and thus outputting and receiving means. Such means may be built into a combined emitting/receiving unit. Furthermore, it is to be understood that reflection means, such as a mirror, may be used and provided in the housing in order to reflect signals within the housing. Reflection means can be provided in order to utilise the combined unit and/or in order to increase a length which the signals travel within the housing prior to being received.

As examples, the first type of leak of the pressurised gas from the gas container valve unit may be due to a faulty valve. The second type of leak may be due to a leak in a connection between the valve unit and the material of the container, such as in connection with a thread, a bad or faulty welding of a bung with threads (may also be called a valve pad) to the material of the gas container. The third type of leak is typically due to corrosion in the bottom part of the gas container, e.g. where a bottom ring is attached to the gas container.

According to an embodiment of the invention, the housing is substantially bell formed and a lower end of the bell is open, and the lower end of the bell is the end where the housing and the external surface are moved relatively towards each other in order to form the substantially closed space within the housing.

The external surface is a surface, which surface the housing can substantially close up against, so as at least to surround the gas container valve unit.

In some embodiments of the invention, the external surface is a surface of the gas container. In these embodiments, the external surface can be a surface part of the gas container, which surface is in immediate vicinity of where the valve unit is provided. Hereby the housing can enclose at least the valve unit for detection of at least the first type of leak. When the housing is provided with e.g. a somewhat larger diameter, the housing can enclose the valve unit and a surface part of the gas container where the valve unit is connected to the gas container, so as also to enable detection of the second type of leak.

The means for providing the substantially closed connection may comprise the housing being provided with a flexible substantially gas impermeable material around the opening of the housing, and which flexible material is in contact with the external surface, such as the gas container in immediate vicinity of the valve unit, when the gas container is detected for any leak. These means may alternatively or additionally comprise that a surface at the lower end of the housing is formed so that it fits the external surface, and so as to form the substantially close space when the housing is moved towards the external surface.

Thus, in accordance with embodiments of the invention, the means for providing the substantially closed connection may comprise that the shape of an opening in the housing is structurally adapted to fit to and surround the surface part of the gas container in immediate vicinity of where the valve unit is provided. The means for providing the substantially closed connection may alternatively or additionally comprise that the housing is provided with a flexible substantially gas impermeable material around the opening of the housing. Such flexible material will then preferably be in contact with the surface of the gas container in immediate vicinity of the valve unit when the gas container is detected for any leak.

The same type of structural adaption of the housing and/or the same manner of providing a flexible material can be provided when the external surface is a support surface for the container.

When the housing is provided with a size so as to enable enclosure of at least a top part and sides of the gas container, thus possibly the complete gas container when co-operating with the external surface, a leak of one or more of the first, second and third leaks can be detected at once. In such embodiments, the external surface can be such as a support surface for the gas container, such as a steel plate for the gas container to be supported by during the detection, and for the housing to be moved relatively to in order to form the substantially closed space within the housing.

In case of detection of a leak in response to (a change in) a signal from the detection means, possibly with following data analysis e.g. in view a threshold etc. e.g. by a control system, the given gas container is sorted out for further inspection, possible repair or controlled emptying and disposal.

Thus, as disclosed, the external surface can be a surface used to support the gas container when the gas leak detector is in use, or the external surface can be a surface part of the gas container where the valve unit is provided.

Particularly, the pressurized gas within the gas container is a gas which is heavier than air, such as a liquefied gas, in particular a liquefied petroleum gas (LPG).

In an embodiment of the invention, the air flow generator comprises one or more fans, each fan having one or more fan blades. In a preferred embodiment, the fan is an air driven fan, i.e. a pneumatically driven fan where a force for driving the fan is provided from an air driven turbine.

In accordance with an embodiment of the invention, the air flow generator is adapted to provide a flow within the substantially closed housing. Such flow may include a vertical flow for moving any leak of gas vertically when the gas leak detector is in use and the housing is moved relatively to the external surface in order to form the substantially closed space within the housing.

According to an embodiment of the invention, the air flow generator is provided within the housing. Thus, at least the air flow generating means, typically one or more blades, is provided within the housing. If a system of guided flow paths and/or a channel system is used for moving the mixture of air and any gas leak in the housing, such channel system may include the one or more fans.

According to an embodiment of the invention, the air flow generator is positioned above the detection means, such as centrally above the detection means and/or centrally with relation to the centre of a gas container to be leak tested, when the gas leak detector is in use and the housing is moved relatively to the external surface in order to form the substantially closed space within the housing. Hereby the mixture of air and any gas leak in the housing can in a simple, but yet effective, manner be pushed or drawn past the detection means.

Thus, according to embodiments of the invention, the air flow generator is arranged to blow a mixture of air and any leak of gas so as to circulate the mixture of air and any leak of gas within the substantially closed space, and so as for the mixture of air and any leak of gas to pass the detection means.

According to an embodiment of the invention, the housing is provided with one or more flow paths leading from a lower end of the housing and to an upper end of the housing. Here the lower and upper ends means as these ends are present when the gas leak detector is in use and the housing is moved substantially horizontally relatively to the external surface in order to form the substantially closed space within the housing.

In particular, the one or more flow paths can be provided by one or more substantially vertical tubes in the housing or one or more substantially vertical channels formed in the housing.

In a preferred embodiment of the invention, the one or more flow paths is/are at least partly provided by a double sided housing, where a space for providing a guided flow is provided between the double sides of the double sided housing.

In accordance with embodiments of the invention, two housings are provided, a first relatively small housing and a second larger housing, one inside the other.

According to these embodiments, the first housing can be moved relatively to a surface part of the gas container where the valve unit is provided for providing a substantially closed connection between the first housing and the surface part of the gas container when the first housing is moved relatively to the surface part of the gas container in order to form a first substantially closed space within the first housing,
and the second housing can be moved relatively to a support surface used to support the gas container when the gas leak detector is in use for providing a second substantially closed connection between the second housing and the support surface when the second housing is moved relatively to the support surface in order to form a second substantially closed space within the second housing.

The first and second substantially closed spaces thus being separate and different. However, the first substantially closed space being a space within the second substantially closed space.

When providing a system with two housings as described herein, a possible advantage can be seen to be that this enables detection of different leaks from different places on the gas container at once and with further precision of e.g. which type of leak is detected, than when e.g. only having one single large housing.

As an example, the second housing is provided with an air flow generator and detection means. Both the first and the second housings are movable towards each of their respective external surfaces, i.e. the surface part of the gas container for the first housing, and a support surface, such as a support plate, used to support the gas container for the second housing. As a result of such movements, the construction and position of the two housings, either of the housings may thus contain a leak of gas from one or more of the first, second or third type(s) of leak in their respective substantially closed spaces.

Thus, when the detection means in the second housing detects a leak of gas hereafter, or even during such movements, at least one of the first, second or third types of leaks are present. And if not, likely none of the leaks are present.

However, when after a period of time, such as 5, 10, 20 or 30 seconds, a leak is detected, such leak is very likely of the third type, which has now grown to a detectable concentration.

When no leak of the third type is detected, and only the first housing is raised somewhat from the surface part of the container, while the second housing stays, and suddenly hereafter, or within e.g. 5, 10, 20 or 30 seconds hereafter, a leak can be detected by the sensor in the second housing, a leak of the first and/or the second type is very likely present.

Thus, according to such embodiment, the first smallest housing should be able to be make a controllable upwards movement relatively to the second larger housing at a controllable moment.

This may be caused by movement means for each of the housings being somewhat independent and/or such as by a release mechanism, such as an activatable spring mechanism, moving the first housing somewhat upwards to open the first substantially closed space for any leak of gas therein to be able to enter the second substantially closed space still formed within the second housing.

Alternatively, the first housing could comprise an additional closable opening or valve, such as in the bottom or top of the first housing as further elaborated in the third next text paragraph.

According to embodiments of the invention with two housings, the second housing comprises an air flow generator and detection means. An embodiment where only the second housing comprises such means has already been elaborated above. However, in addition, the first housing may also comprise at least a detector, and possibly also an air generator.

When the first housing also comprises detection means, the moving means does not have to be independently operateable or constructed with a release or similar as explained above, but leaks of the first and/or second type may just be detected by the detection means provided within and for the first housing.

According to embodiments of the invention, the first housing comprises a closable opening or valve, in addition to the lower open end, so as hereby to enable control of a release of any leak of gas within the first housing into the second housing and/or vice versa when the open lower end is substantially closed by co-operation with the gas container. Hereby controlled detection of leak(s) of the first and/or the second type can be detected using the air flow generator and detection means within the second housing.

According to a second aspect of the invention there is provided a method of detecting a leak of a gas, such as LPG, from
- a first type of leak of gas from a gas container valve unit and/or
- a second type of leak of gas between the gas container valve unit and the gas container and/or
- a third type of leak of gas through a wall or a welding of the gas container, where the gas-leak detector comprises
   - a housing which can be moved relatively to an external surface so as at least partly to surround the gas container valve unit, where the housing comprises means for providing a substantially closed connection between the housing and the external surface when the housing is moved relatively to the external surface in order to form a substantially closed space within the housing, and
   - detection means for detecting the first and/or the second leak and/or the third leak and the detection means is provided in the substantially closed space in
      the housing while any leak of gas remains within the substantially closed space, and
   - an air flow generator, such as a single fan, for providing and moving a mixture of air and any leak of gas within the substantially closed space,
wherein the method of detecting the leak of the pressurised gas comprises
a) moving the housing relatively to the external surface so as at least partly to surround the gas container valve unit, and
b) providing a substantially closed connection between the housing and the external surface when the housing is moved relatively to the external surface in order to form a substantially closed space within the housing, wherein the substantially closed space is a space where a gas may possibly be forced into, but where any gas is substantially not allowed to or able to exit, and
c) providing and moving a mixture of air and any leak of gas within the substantially closed space, and
d) detecting the first and/or the second and/or the third leak of gas with the detection means, the detection means being provided in the substantially closed space in the housing while any leak of gas remains within the substantially closed space.

Thus, an improved method of gas leak detection is provided. Possible advantages of the method follows from the described in relation to the gas leak detector and/or from the remaining description. Thus, the advantages or benefits described for the apparatus aspect also apply for the method aspect. Particularly, the manner of how to operate the apparatus, e.g. as elaborated above also applies to the method aspect of the invention, and method claims for such embodiments are foreseen within the basis and wording present and used herein, e.g. above in the summary for the apparatus aspect.

Prior to the step b) the housing can be purged with substantially clean air, such as to prevent any remaining leak from a leak of a prior gas container detection of being present in the housing.

In general by writing that 'it is an advantage' or a benefit or similar of the present invention and referring thereto, it must be understood that this advantage may be seen as a possible advantage provided by the invention, but it may also be understood that the invention is particularly, but not exclusively, advantageous for obtaining the described advantage.

In general, the various aspects, i.e. device and method and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 is a side-view of a gas leak detector,
FIG. 2 is a perspective view of the gas leak detector,
FIG. 3 is a top view of the gas leak detector shown in figure 1 and 2, with indication of where the cross sectional view of figure 4 is seen along,
FIG. 4 is a drawing of the cross-section A-A as indicated in figure 3,
FIG. 5 is the leak detector as shown in figure 4, where the housing has been moved to an external surface, in the form of a support plate for the gas container, and in order to form a substantially closed space within the housing,
FIG. 6 is a close-up of an upper part of the housing shown in figure 5, focusing on the air flow generator and detection means,
FIG. 7 is a close-up of the housing shown in figure 5, focusing on flow paths in the housing,
FIG. 8 is a close-up of the housing shown in figure 5 and 6, focusing on a situation where the air flow generator has provided a mixture of air and leaked gas within the housing,
FIG. 9 is cross-sectional view of an embodiment of the gas leak detector for detection of a first and/or a second type of leak,
FIG. 10 is the cross-sectional view of the embodiment drawn in figure 8, where the housing has been moved to an external surface, in the form of a surface part of the gas container where the valve unit is provided,
FIG. 11 is a cross-sectional view of an embodiment of the gas leak detector with a first housing and a second housing, for detection of a first and/or a second type of leak and/or the third type of gas leak, and
FIG. 12 is the cross-sectional view of the embodiment drawn in figure 10, where the housings have been moved in order to form a substantially closed space within the first housing, and a substantially closed space within the second housing.

### DESCRIPTION OF EMBODIMENTS

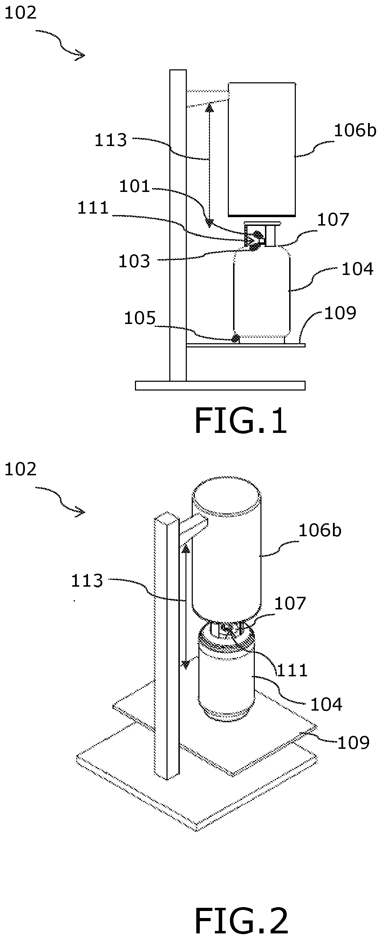

FIG. 1 is a side-view of a gas leak detector 102. The gas leak detector 102 may be included in a gas filling system for filling gas containers. The leak detector 102 is generally used for detecting if a gas container with a gas under pressure, such as liquid petroleum gas (LPG), has a gas leak.

Such leak can be from a container valve unit, and/or from an assembly such as a bung between the gas container valve unit and the gas container and/or from the gas container itself, such as where a base ring is attached to the container.

Normally the system works automatically, and is included where filling of the gas containers is also carried out and sorts out any or those containers having one of the mentioned first, second and/or third types of leak.

The shown gas leak detector 102 can be a part of a complete transport system for transporting the gas container in a gas container filling system and/or in a gas leak detecting system. In the shown embodiment, a leak detector 102 is provided for the gas containers to be transported to a position of the gas leak detector. Alternatively, a gas leak detector is mounted on each transport unit in the transport system in order to detect any leak of gas for a prolonged detection time period compared to if the gas containers were to be transported to the position of the gas leak detector. Alternatively, several single leak detection stations or systems can be provided in order to prolong detection time and/or to increase capacity.

The figure illustrates a gas leak detector 102 for detecting a leak of gas from a first type of leak of gas 101 from a gas container valve unit and/or a second type of leak of gas 103 between the gas container valve unit and the gas container and/or a third type of leak of gas 105 through a wall or a welding of the gas container. The third type of gas leak is typically in the lower part of the gas container as illustrated, such as at the attachment of a base ring of the gas cylinder as illustrated.

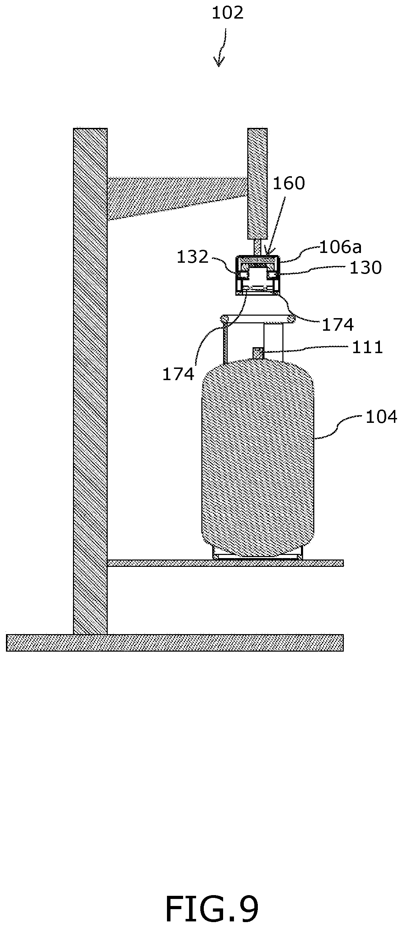

As illustrated, the gas-leak detector 102 includes a housing, in this embodiment a second housing 106b (first housing described in figures 9-12) which can be moved horizontally and relatively to an external surface, in this embodiment a support plate 109, so as at least partly to surround the gas container valve unit 111. This movement is illustrated with the two-way arrow 113. The housing comprises means (not detailed in the figure) for providing a substantially closed connection between the housing 106 and the external surface (107 or 109) when the housing is moved relatively to the external surface in order to form a substantially closed space within the housing. In the drawing it is indicated that the housing is moved, which may be preferred. However, the support plate may additionally or alternatively also move upwards, so that the housing is connectable to the gas container by moving the housing with moving means towards the external surface and/or vice versa.

In the figures a cylindrical housing second 106b is shown, though it is to be understood that the housing may have any form as long as it has an opening which fits around the container and as long as it can be adapted to form the substantially closed space when connected to the support plate 109.

Herein is referred to a gas container 104. However, the gas containers are gas bottles or gas cylinders as illustrated in the figures. These containers are standardized containers for storing gas, such as propane gas or LPG in liquid form, e.g. for industrial use or for use in households for supplying gas to cookers, heaters and other devices. The gas containers have a weight from approximately 2.5 to 50.0 kg when empty and a weight from approximately 5.0 to 100.0 kg when filled. A height of such gas containers is typically from approximately 150 mm to 1500 mm. A diameter or width of the gas containers is typically from approximately 150 mm to 400 mm.

FIG. 2 is a perspective view of the gas leak detector 102 of figure 1. The figure illustrates some of the elements as shown and as elaborated in figure 1, however in a perspective view.

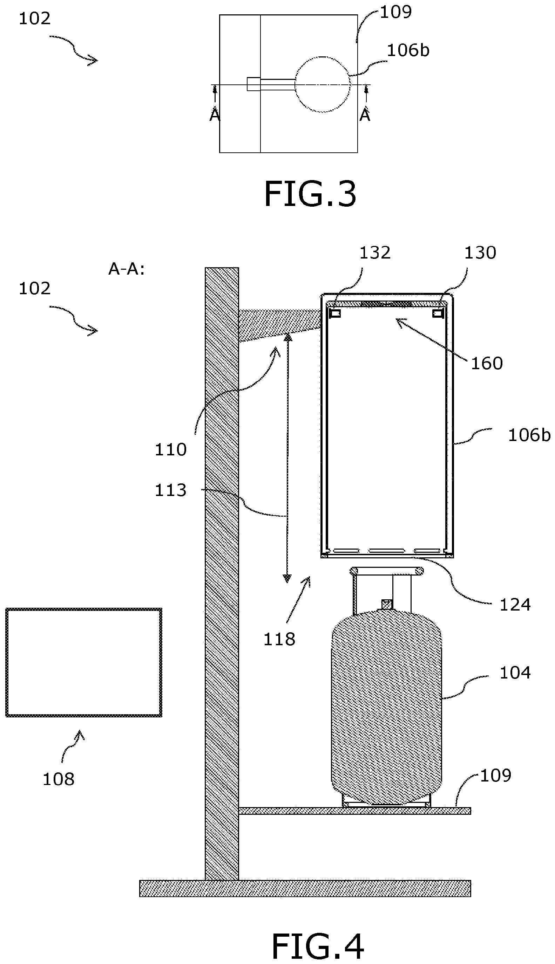

FIG. 3 is a top view of the gas leak detector 102 shown in figure 1 and 2, with indication of where the cross sectional view A-A of figure 4 is seen along.

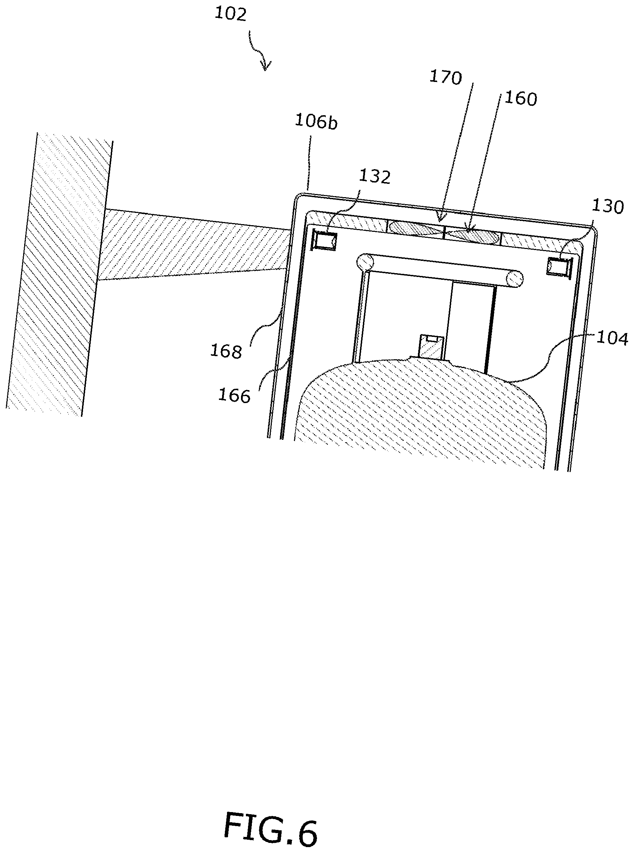

FIG. 4 is a drawing of the cross-section A-A as indicated in figure 3. The figure illustrates detection means 132, 130 for detecting the first and/or the second and/or the third leak of gas. The detection means is provided in the substantially closed space in the second housing 106b, which is formed when the housing co-operates with an external surface, while any leak of gas remains within the substantially closed space. It also follows that the gas leak detector 102 includes an air flow generator 160, illustrated as a single fan, seen in an enlarged view in figure 6, for providing and moving a mixture of air and any leak of gas within the substantially closed space. Herein, the air flow generator 160 is illustrated positioned just above the detection means. However, the air flow generator 160 may be positioned just below where the detection means are positioned. Although positioning of the air flow generator towards the top of the housing is preferred, other positions could be used. Still further, a single air flow generator as illustrated is preferred, however multiple air flow generators, such as two, three, four or more could be used.

The view shows detection means 132, 130 provided in the housing 106b, provided diametrically opposite each other. In this example the detection means comprises outputting means in the form of an infrared light transmitter 132 with an optical lens and receiving means in the form of an infrared light receiver 130 with an optical lens. Parts of the detection means such as the means for outputting or transmitting and receiving the infrared lights signals, may be provided outside the housing. Then, and as an example, optical cables can be used to transfer the light signals into and from the housing.

The detection means comprising the infrared light transmitter is built as an explosion safe unit fulfilling the Exxd/EEx or ATEX requirements according to European norms. The infrared light transmitter 132 is generating energy to be received by the infrared light receiver 130. The infrared light transmitter 132 can be mounted on a piece of printed circuit board and provided from a number of individually assembled parts which along an outer surface is provided with sealing means. The sealing means are provided in order for the explosion safe unit to form part of the housing 106 and for forming the substantially closed space when mounted in the housing. It is to be understood that when the housing is assembled, a part of the outputting means, i.e. the infrared light transmitter with the optical lens, may form a part of a barrier providing the substantially closed space.

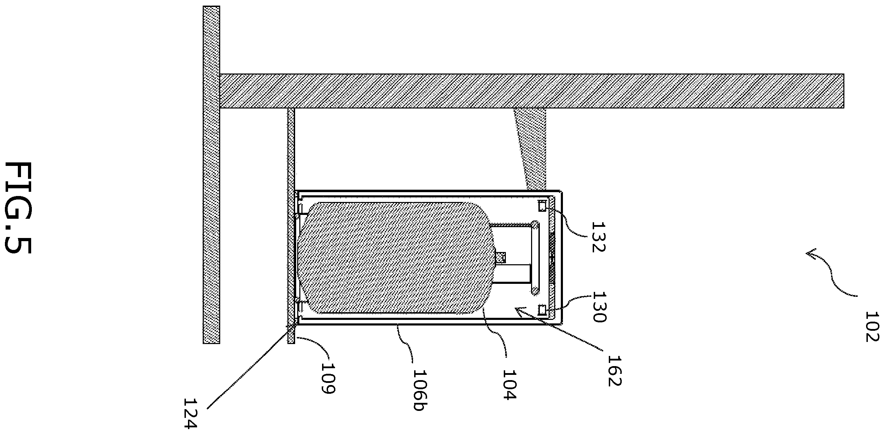

When an IR light signal is outputted - or transmitted - from the infrared light transmitter 132 and received in the infrared light receiver 130 it will be sent through any gas leak present in the substantially closed space when the substantially closed space is formed in the housing. The infrared light signal travels from the infrared transmitter 132 to the infrared receiver 130. When an infrared device is provided on each side of the second housing 106b as shown, and when the housing is connected to the support plate 109, as shown in figure 5, the infra-red light signal is outputted to the substantially closed space and can be received by the infrared light receiver 130 along with at least one possible change of the signal due to the signal being sent through the substantially closed space.

In the example of infrared light transmitters and receivers, the determination of whether or not gas is leaking from the container 104 is determined based on an electrical signal from the infrared light receiver and corresponding to the energy received. The energy received depends on the energy sent, and the presence and composition of the gas and thus a composition of any leaking gas and air contained in the substantially closed space.

This electrical signal is possibly transferred to a control system 108 and the determination is possibly carried out in the control system and may e.g. result in lighting a red lamp when a certain level of leaking gas is detected and afterwards sorting out the particular leaking gas container for further handling.

As an alternative or addition to the devices and methods of detection already described, the detection means may comprise a light sensitive element and a light source. Such detection means may be used to record a picture within the housing in order to hereby detect whether or not a leaking gas container is present. The leak can be detected in that a leaking gas container may give a certain picture recorded by the light sensitive element.

As alternatives, or moreover in addition to the devices and methods of detection described, a microphone (not shown) provided in the housing can be used to detect whether or not a leak is present in that a leaking container may give high frequency vibrations which can be detected by the microphone.

Towards an opening 118 at a lower end of the gas container, the housing is provided with a flexible substantially gas impermeable material 124 around the opening 118 of the housing. The flexible material 124 is in contact with the support plate 109 when the gas container is detected for any leak, as illustrated in figure 5.

The control system 108 is illustrated as a box which includes electronics, processing equipment etc., and e.g. possibly also pneumatic control of a system comprising the gas leak detector. The control system 108 is adapted for controlling power supply and signal communication for the leak detector and the leak detecting system. Furthermore, the control system is adapted for controlling any air or electricity needed for the moving means 110 for moving the housing 106 towards the support plate 109, as well as controlling any adding of cleaning/purging air to inside the second housing 106b prior to detecting and prior to forming the substantially closed space.

FIG. 5 is the leak detector as shown in figure 4, where the second housing 106b has been moved to the external surface, in order to form a substantially closed space 162 within the second housing. The substantially closed space is provided to enclose any leak, but is also formed to isolate a controlled environment inside the housing from the outside environment. In the illustrated embodiment, the external surface is the support plate 109 for the gas container.

It follows from the figure that the housing comprises means for providing a substantially closed connection between the housing and the support plate 109. It can be seen that these means comprises that the gas container and its opening in the second housing 106b are structurally adapted with a size and shape to fit to and surround the gas container. An inner diameter is somewhat larger than the diameter of the gas container, such as 10, 20, 30, 40 or 50 mm larger in diameter. The height is somewhat larger than the height of the gas container, so as to be able to enclose the gas container within the second housing 106b, and so that the detection means 132, 130 have an unobstructed line of transmission between them above a sleeve of the gas container. The shape is substantial cylindrical with an open lower end, thus substantially bell formed, for the gas container to enter.

In some applications, structurally adapting the second housing 106b to the plate, and moving the housing closely towards the support plate, such as letting it touch the support plate 109, or even just letting it stop 0.2, 0.5, 1, 2 mm, or even just less than 5 mm above the support plate is enough to obtain a precise determination.

This may in particular be the case where the air flow generator 160 presses air towards and into the flow paths 164, and thus sucks the mixture of air and any leak of gas past the detection means 132, 130. If the detection means were positioned above the air flow generator, then the mixture would both be pressed into the flow paths 164 and pressed past the detection means with this direction of flow.

However, in the shown embodiment there is also provided a seal 124 around the edge of the second housing 106b, and thus the means for providing the substantially closed connection comprises that that the second housing 106b is provided with a seal 124, such as flexible material substantially gas impermeable material around the opening 118. The seal then seals any remaining opening between the housing and the gas container, when the seal is in contact with the surface of the gas container and when the gas container is detected for any leak.

FIG. 6 is a close-up of an upper part of the housing shown in figure 5, focusing on the air flow generator 160 and detection means 132 and 130. It follows from the figure that the second housing 106b is double sided, i.e. is provided with two walls or two bells, an innermost wall 166 and an outermost wall 168. The bells are substantially identical, however, the innermost wall 166 is somewhat smaller than the outermost wall 168. Further, the innermost bell has a through going hole 170 where the air flow generator is positioned. For simplicity, any driving means or connection to driving means, such as an air turbine driven axle, for the air flow generator are not shown in the drawing. Hereby a guided flow within the second housing 106b can be provided.

Alternatively, a similar guided flow can be obtained by one or more flow paths which is/are provided by one or more substantially vertical tubes in the housing or one or more substantially vertical channels formed in the housing and which flow path(s), as the double sides, is/are guiding a mixture of air and any leaking gas from a lower part of the housing to an upper part of the housing.

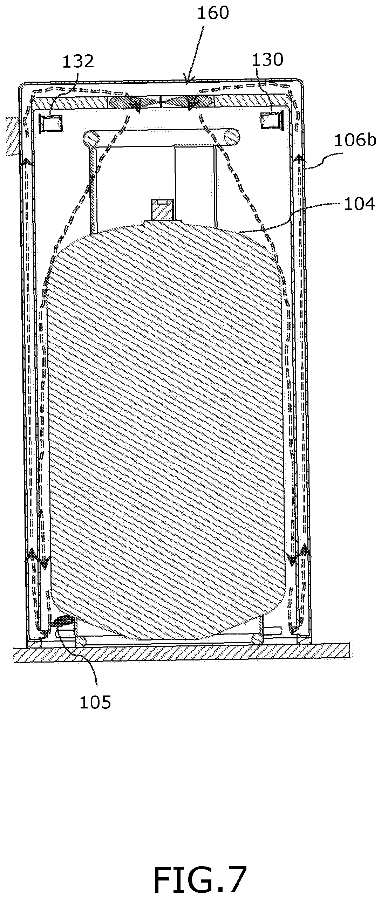

FIG. 7 is a close-up of the housing shown in figure 5, focusing on flow paths in the housing. It is illustrated that the gas container has a gas leak 105 at the connection between a wall of the gas container 104 and a base of the gas container. It is also illustrated that the air flow generator 160 is positioned towards the top of the second housing 106b and substantially in the middle of the second housing 106b.

The drawing illustrates that the air flow generator 160 sucks air out of the flow path and presses the air past the detection area of the detection means. As seen the flow path leads from a lowermost end of the second housing 106b to an uppermost end thereof via the space between the innermost and outermost walls of the double sided second housing 106b. Due to the gas being heavier than air, any leak will seek towards the lowermost part of the enclosed space within the housing. Thus, the air flow generator will create mixture of air and leaking gas and create a substantially vertical flow, bringing the gas mixture of air and the leaking gas past the detection means.

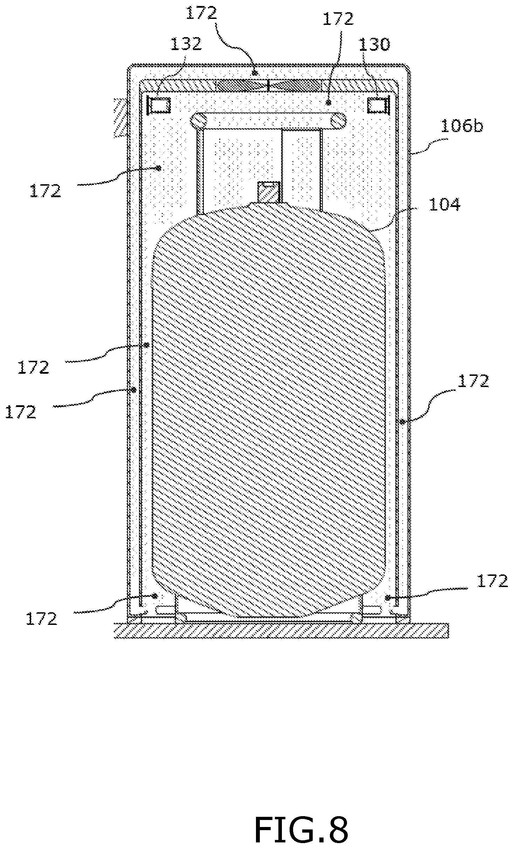

FIG. 8 illustrates the situation within the second housing 106b briefly after the substantially closed space has been formed, and briefly after the air flow generator has run for a given period. It is illustrated that instead of the rather concentrated leak 105, there is now a mixture of the leaking and/or leaked gas and air, substantially homogeneous and substantially within the complete enclosed space in the housing. The mixture 172 is illustrated with vague grey dots everywhere inside the substantially closed space.

The detection is provided when the substantially closed hollow space is provided within the housing, i.e. during a period where any leak of gas remains within the substantially closed hollow space. The detection of any leaking gas from the gas container is carried out within the second housing 106b.

However, the detection may be initiated just before and/or while and/or just after the substantially closed hollow space is provided within the housing. 'While or when' may also mean during the complete period of having the substantially closed hollow space, but may alternatively only mean for a period of e.g. the mid 0.1 second of a complete period of e.g. 0.3 seconds of having the substantially closed hollow space. 'Just before, while and just after' may mean that the detection is started 0.1 second before the housing forms the substantially closed hollow space with the gas container 104, during 0.3 second when the substantially closed hollow space is provided and until 0.1 second after starting a movement of the gas container and/or the second housing 106 away from each other - thus also until e.g. 0.1 second after opening the substantially closed hollow space.

Independent of the timing condition of when or while, the detection is in accordance with embodiments of the invention both provided within the housing and as any leak of gas remains within the substantially closed hollow space in the housing. This among others means that there is not sucked or pressed any gas out of the substantially closed space for detection. This also means that any leaking gas is not sucked or pressed out of the second housing 106 or the substantially closed space for detection.

If the detection is started shortly before forming the substantially closed hollow space and/or ended just after the substantially closed hollow space is opened, it can not necessarily be assured that just a little gas exits the housing through an opening 118 in the housing during detection.

Preferably, the air flow generator 106 is started when the substantially closed space has been formed. The detection may be provided after running the air flow generator for e.g. 0.1, 0.2, 0.3, 0.5, 1, 2, 3, 4, 5 or even 10 seconds, and the detection may be carried out, one or more times or continuously when the air generator is driven, and/or one or more times or continuously immediately after it has been stopped.

The detection is improved the longer a leaking container is present within the substantially closed housing. However, the larger volume within the housing, the lower concentration of a given leak when mixed in the volume. Thus, detection time, and e.g. the period in which the substantially closed space is formed, and to some extent also the duration of the period in which the air flow generator is driven, can be increased to be able to detect smaller leaks. Similarly, when a larger volume, such as for the large housing 106b, compared to the smaller housing 106a, is to be detected for a leak, the period may be increased in order to provide a given detectable concentration.

However, with the detector and methods described herein, better detection with decreased or the same detection time as in existing technology is provided. An example of better detection may be: increased correctness of lower amounts of leaks than for existing technology.

In figures 1-8 there is shown a cylindrical second housing 106b and a cylindrical first housing 106a is shown in figures 9-12. Though, it is to be understood that the first housing may have any form as long as it has an opening which fits around the container valve unit and preferably fits within a sleeve 120 of the container. Likewise for the bigger housing 106b, as long as it can be adapted to form the substantially closed space enclosing the complete gas container when connected to the support plate 109. However, some space, e.g. between the container side walls and an inner wall of the housing should be present, to ensure that the air flow generator is able to provide a circulation of the mixture of air and any leaked/leaking gas within the housing.

FIG. 9 is cross-sectional view of an embodiment of the gas leak detector for detection of a first and/or a second type of leak. The first housing 106a is a smaller version of the second housing 106b as described herein. It is adapted to fit within the sleeve of the gas container, and so that a circular open end of the housing can be suited for contact with an external circular surface part of the gas container close to where the valve unit 111 is installed.

The first housing 106a is also provided with double sides, or guided flow paths, as explained for the bigger housing 106b. Further, detection means 130, 132 and an air flow generator 160 is provided and working as explained for the housing 106b. Inner wall openings 174 in the innermost wall of this smaller double sided first housing 106a are also visible towards the lowermost part of the housing.

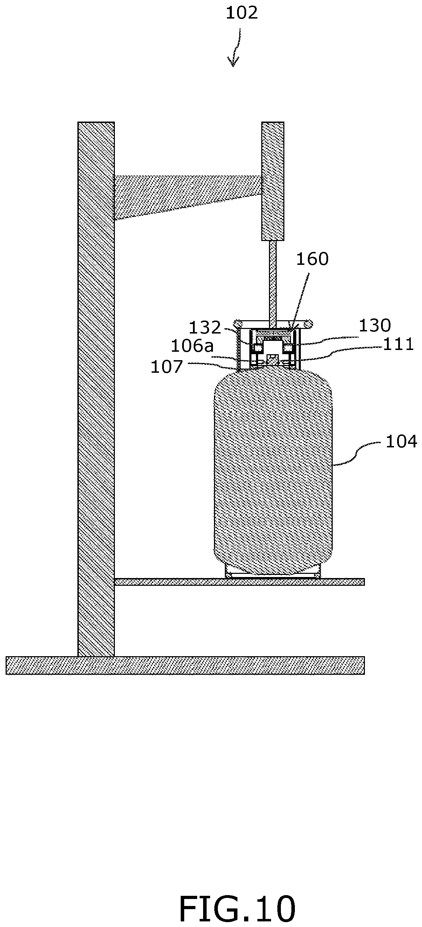

FIG. 10 is the cross-sectional view of the embodiment drawn in figure 9, where the first housing 106a has been moved to the surface part 107 of the gas container 104 which is in vicinity, i.e. just outside a diameter, of a hole in the gas container where the valve unit 111 is installed. Hereby, and in co-operation, the housing 106a and the gas container 104 forms the substantially closed space within the first housing 106a.

Thus, detection as described for figure 1 to 8 can be carried out. However, this detection is to detect the first type of leak and/or the second type of leak or any other leaks near or in the valve unit 111.

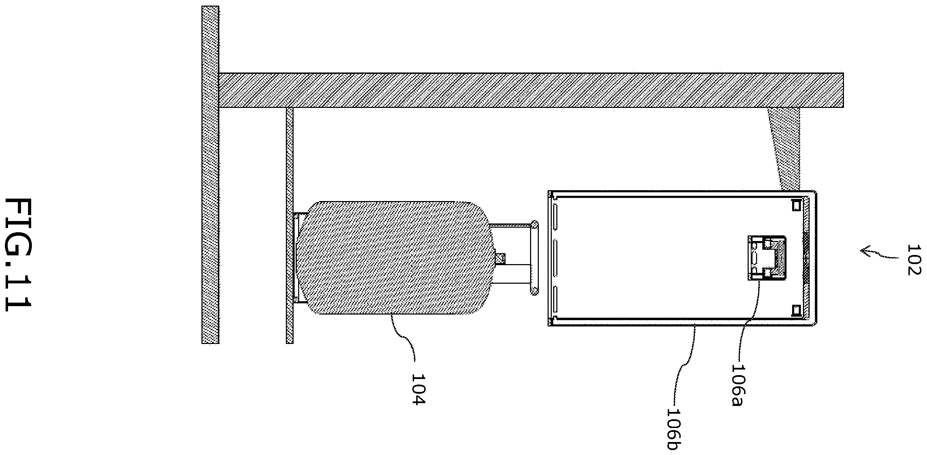

FIG. 11 is a cross-sectional view of an embodiment of the gas leak detector with a first housing 106a and a second housing 106b, for detection of a first and/or a second type of leak and/or the third type of gas leak.

With such construction of a first housing 106a positioned inside and just below detection means of the bigger second housing 106b, one or more or all of the first, second and third types of leaks may be determined when the gas container is at a given controlled position centrally beneath each of the first and second housings 106a and 106b. Since each of the housings may have an air flow generator 160 and separate detection means, each set of detection means can separately detect either the first and/or the second leak with the first housing 106a or the third type of leak with the second housing.

If a valve (not shown) is provided in the first housing 106a, and/or the first housing is able to move independently of the second housing 106b, any leak of the first and/or second type may be detected by only having leak detection means inside the second housing as further elaborated in the summary section.

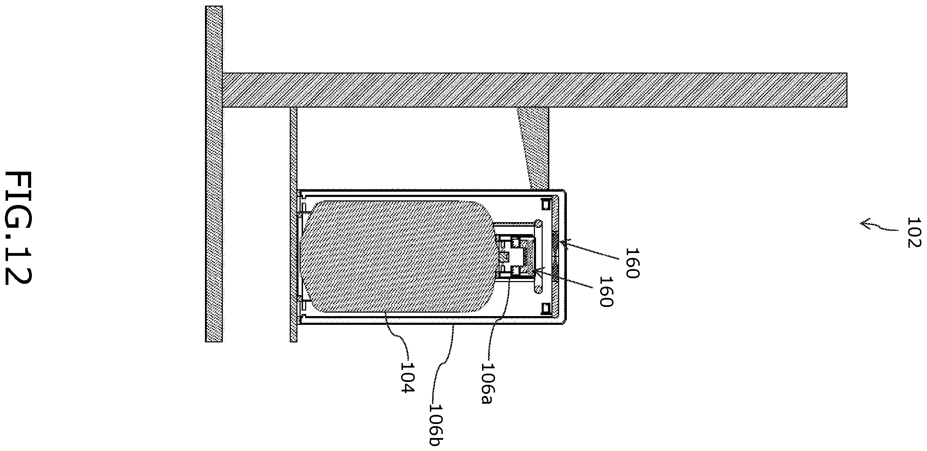

FIG. 12 is the cross-sectional view of the embodiment drawn in figure 11, where the housings have been moved in order to form a first substantially closed space within the first housing 106a, and a second substantially closed space within the second housing 106b.

In short, there is herein disclosed that the invention provides a solution for improved detection of any leaking LPG (Liquid Petroleum Gas) cylinders in due time, while the leak detecting capacity can even also be improved when compared to known systems. There is disclosed a gas leak detector 102 for detecting a leak of gas from a gas cylinder 104 valve unit 111 and/or a leak of gas between the gas cylinder valve unit and the gas cylinder and/or a leak of gas through a wall or a welding of the gas cylinder. The gas leak detector has a housing 106a, 106b which can be moved relatively to an external surface 107, 109. This movement so as at least partly to surround a gas cylinder valve unit 111. The gas leak detector 102 further has an air flow generator 160, such as a single fan, for providing and moving a mixture of air and any leak of gas within a substantially closed space in the housing and for improving detection of a gas leak.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims, however the inclusion of the reference signs is only for clarity reasons and should not be construed as limiting the scope of the claims.

## Claims

1. Gas leak detector (102) for detecting a leak of gas from
- a first type of leak of gas (101) from a gas container (104) valve unit (111) and/or
- a second type of leak of gas (103) between the gas container valve unit and the gas container and/or
- a third type of leak of gas (105) through a wall or a welding of the gas container,
the gas-leak detector comprises
- a housing (106a, 106b) which can be moved relatively to an external surface (107, 109) so as at least partly to surround the gas container valve unit, where the housing comprises means (124) for providing a substantially closed connection between the housing and the external surface when the housing is moved relatively to the external surface in order to form a substantially closed space within the housing, wherein the substantially closed space is a space where a gas may possibly be forced into, but where any gas is substantially not allowed to or able to exit, and
- detection means (132, 130) for detecting the first and/or the second and/or the third leak of gas and configured so that the detection is provided in the substantially closed space in the housing while any leak of gas remains within the substantially closed space, and
wherein the gas leak detector (102) further comprises
- an air flow generator (160), such as a single fan, for providing and moving a mixture of air and any leak of gas within the substantially closed space.

2. The gas leak detector according to claim 1, wherein the housing (106a, 106b) is substantially bell formed, and a lower end of the bell is open, and the lower end of the bell is the end where the housing (106a, 106b) and the external surface (107, 109) are moved relatively towards each other in order to form the substantially closed space within the housing.

3. The gas leak detector according to claim 1, wherein the external surface (109) is a support surface (109) used to support the gas container when the gas leak detector is in use or the external surface (107) is a surface part (107) of the gas container where the valve unit is provided.

4. The gas leak detector according to any of the preceding claims, wherein the air flow generator (160) comprises one or more fans, each fan having one or more fan blades.

5. The gas leak detector according to any of the preceding claims, wherein the air flow generator (160) is adapted to provide a flow within the substantially closed housing including a vertical flow for moving any leak of gas vertically when the gas leak detector is in use and the housing is moved relatively to the external surface in order to form the substantially closed space within the housing.

6. The gas leak detector according to any of the preceding claims, wherein the air flow generator (160) is provided within the housing (106a, 106b).

7. The gas leak detector according to any of the preceding claims, wherein the air flow generator (160) is positioned above the detection means (132, 130), when the gas leak detector is in use and the housing is moved relatively to the external surface in order to form the substantially closed space within the housing.

8. The gas leak detector according to any of the preceding claims, wherein the air flow generator (160) is arranged to blow a mixture of air and any leak of gas so as to circulate the mixture of air and any leak of gas within the substantially closed space, and so as for the mixture of air and any leak of gas to pass the detection means (132, 130).

9. The gas leak detector according to any of the preceding claims, wherein the housing is provided with one or more flow paths leading from a lower end of the housing and to an upper end of the housing when the gas leak detector is in use and the housing is moved relatively to the external surface in order to form the substantially closed space within the housing (106a, 106b).

10. The gas leak detector according to claim 9, wherein the one or more flow paths is/are provided by one or more substantially vertical tubes in the housing or one or more substantially vertical channels formed in the housing.

11. The gas leak detector according to claim 9, wherein the one or more flow paths is/are at least partly provided by a double sided housing (106a, 106b), where a space for providing a guided flow is provided between the double sides (166, 168) of the double sided housing (106a, 106b).

12. The gas leak detector according to any of the preceding claims, wherein two housings are provided, a first relatively small housing and a second larger housing, one inside the other, wherein
- the first housing (106a) can be moved relatively to a surface part (107) of the gas container (104) where the valve unit (111) is provided for providing a substantially closed connection between the first housing and the surface part of the gas container when the first housing is moved relatively to the surface part of the gas container in order to form a first substantially closed space within the first housing, and
- the second housing (106b) can be moved relatively to a support surface (109) used to support the gas container when the gas leak detector is in use for providing a second substantially closed connection between the second housing (106b) and the support surface when the second housing is moved relatively to the support surface in order to form a second substantially closed space within the second housing.

13. The gas leak detector according to claim 12, wherein the second housing (106b) comprises an air flow generator (160) and detection means (130, 132).

14. The gas leak detector according to claim 12 or 13, wherein the first housing comprises a closable opening, in addition to the lower open end, so as hereby to enable control of a release of any leak of gas within the first housing into the second housing and/or vice versa.

15. A method of detecting a leak of a gas, such as LPG, from
- a first type of leak of gas (101) from a gas container valve unit and/or
- a second type of leak of gas (103) between the gas container valve unit and the gas container and/or
- a third type of leak of gas (105) through a wall or a welding of the gas container,
where the gas-leak detector comprises
- a housing (106a, 106b) which can be moved relatively to an external surface (107, 109) so as at least partly to surround the gas container valve unit (111), where the housing comprises means (124) for providing a substantially closed connection between the housing and the external surface when the housing is moved relatively to the external surface in order to form a substantially closed space within the housing, and
- detection means for detecting the first and/or the second leak and/or the third leak and configured so that the detection is provided in the substantially closed space in the housing while any leak of gas remains within the substantially closed space, and
- an air flow generator (106), such as a single fan, for providing and moving a mixture of air and any leak of gas within the substantially closed space,
wherein the method of detecting the leak of the pressurised gas comprises
a) moving the housing relatively to the external surface (107, 109) so as at least partly to surround the gas container valve unit, and
b) providing a substantially closed connection between the housing (106a, 106b) and the external surface when the housing is moved relatively to the external surface in order to form a substantially closed space within the housing, wherein the substantially closed space is a space where a gas may possibly be forced into, but where any gas is substantially not allowed to or able to exit, and
c) providing and moving a mixture of air and any leak of gas within the substantially closed space, and
d) detecting the first and/or the second and/or the third leak of gas with the detection means, the detection being provided in the substantially closed space in the housing while any leak of gas remains within the substantially closed space.

## Patentansprüche

1. Gasleckdetektor (102) zum Detektieren eines Gaslecks aus
- einer ersten Art von Gasleck (101) aus einer Gasbehälter- (104) Ventileinheit (111) und/oder
- einer zweiten Art von Gasleck (103) zwischen der Gasbehälterventileinheit und dem Gasbehälter und/oder
- einer dritten Art von Gasleck (105) durch eine Wand oder eine Schweißnaht des Gasbehälters,
wobei der Gasleckdetektor umfasst
- ein Gehäuse (106a, 106b), das relativ zu einer Außenfläche (107, 109) bewegt werden kann, so dass es die Gasbehälterventileinheit zumindest teilweise umgibt, wobei das Gehäuse ein Mittel (124) zum Bereitstellen einer im Wesentlichen geschlossene Verbindung zwischen dem Gehäuse und der Außenfläche umfasst, wenn das Gehäuse relativ zu der Außenfläche bewegt wird, um einen im Wesentlichen geschlossenen Raum innerhalb des Gehäuses zu bilden, wobei der im Wesentlichen geschlossene Raum ein Raum ist, in den ein Gas möglicherweise hineingedrückt werden kann, aus dem aber im Wesentlichen kein Gas austreten darf oder kann, und
- ein Detektionsmittel (132, 130) zum Detektieren des ersten und/oder des zweiten und/oder des dritten Gaslecks, und das so konfiguriert ist, dass die Detektion in dem im Wesentlichen geschlossenen Raum in dem Gehäuse bereitgestellt wird, während jegliches Gasleck in dem im Wesentlichen geschlossenen Raum verbleibt, und
wobei der Gasleckdetektor (102) weiter umfasst
- einen Luftstromgenerator (160), wie zum Beispiel ein einzelnes Gebläse, zum Bereitstellen und Bewegen eines Gemischs aus Luft und jeglichem Gasleck innerhalb des im Wesentlichen geschlossenen Raums.

2. Gasleckdetektor nach Anspruch 1, wobei das Gehäuse (106a, 106b) im Wesentlichen glockenförmig ist und ein unteres Ende der Glocke offen ist, und das untere Ende der Glocke das Ende ist, an dem das Gehäuse (106a, 106b) und die Außenfläche (107, 109) relativ zueinander bewegt werden, um den im Wesentlichen geschlossenen Raum innerhalb des Gehäuses zu bilden.

3. Gasleckdetektor nach Anspruch 1, wobei die Außenfläche (109) eine Stützfläche (109) ist, die verwendet wird, um den Gasbehälter zu stützen, wenn der Gasleckdetektor in Gebrauch ist, oder die Außenfläche (107) ein Oberflächenteil (107) des Gasbehälters ist, an dem die Ventileinheit bereitgestellt ist.

4. Gasleckdetektor nach einem der vorstehenden Ansprüche, wobei der Luftstromgenerator (160) ein oder mehrere Gebläse umfasst, wobei jedes Gebläse einen oder mehrere Gebläseflügel aufweist.

5. Gasleckdetektor nach einem der vorstehenden Ansprüche, wobei der Luftstromgenerator (160) so angepasst ist, dass er eine Strömung innerhalb des im Wesentlichen geschlossenen Gehäuses bereitstellt, einschließlich einer vertikalen Strömung, um jegliches Gasleck vertikal zu bewegen, wenn der Gasleckdetektor in Gebrauch ist und das Gehäuse relativ zu der Außenfläche bewegt wird, um den im Wesentlichen geschlossenen Raum innerhalb des Gehäuses zu bilden.

6. Gasleckdetektor nach einem der vorstehenden Ansprüche, wobei der Luftstromgenerator (160) innerhalb des Gehäuses (106a, 106b) bereitgestellt ist.

7. Gasleckdetektor nach einem der vorstehenden Ansprüche, wobei der Luftstromgenerator (160) oberhalb des Detektionsmittels (132, 130) positioniert ist, wenn der Gasleckdetektor in Gebrauch ist und das Gehäuse relativ zu der Außenfläche bewegt wird, um den im Wesentlichen geschlossenen Raum innerhalb des Gehäuses zu bilden.

8. Gasleckdetektor nach einem der vorstehenden Ansprüche, wobei der Luftstromgenerator (160) so angeordnet ist, dass er ein Gemisch aus Luft und jeglichem Gasleck bläst, um das Gemisch aus Luft und jeglichem Gasleck innerhalb des im Wesentlichen geschlossenen Raums zu zirkulieren, so dass das Gemisch aus Luft und jeglichem Gasleck das Detektionsmittel (132, 130) passiert.

9. Gasleckdetektor nach einem der vorstehenden Ansprüche, wobei das Gehäuse mit einem oder mehreren Strömungswegen bereitgestellt ist, die von einem unteren Ende des Gehäuses und zu einem oberen Ende des Gehäuses führen, wenn der Gasleckdetektor in Gebrauch ist und das Gehäuse relativ zu der Außenfläche bewegt wird, um den im Wesentlichen geschlossenen Raum innerhalb des Gehäuses (106a, 106b) zu bilden.

10. Gasleckdetektor nach Anspruch 9, wobei der eine oder die mehreren Strömungswege durch ein oder mehrere im Wesentlichen vertikale Rohre in dem Gehäuse oder einen oder mehrere im Wesentlichen vertikale Kanäle, die in dem Gehäuse ausgebildet sind, bereitgestellt ist/sind.

11. Gasleckdetektor nach Anspruch 9, wobei der eine oder die mehreren Strömungswege zumindest teilweise durch ein doppelseitiges Gehäuse (106a, 106b) bereitgestellt ist/sind, wobei ein Raum zur Bereitstellung einer geführten Strömung zwischen den Doppelseiten (166, 168) des doppelseitigen Gehäuses (106a, 106b) bereitgestellt ist.

12. Gasleckdetektor nach einem der vorstehenden Ansprüche, wobei zwei Gehäuse bereitgestellt sind, ein erstes, relativ kleines Gehäuse und ein zweites, größeres Gehäuse, eines in dem anderen, wobei
- das erste Gehäuse (106a) relativ zu einem Oberflächenteil (107) des Gasbehälters (104) bewegt werden kann, wobei die Ventileinheit (111) bereitgestellt ist, um eine im Wesentlichen geschlossene Verbindung zwischen dem ersten Gehäuse und dem Oberflächenteil des Gasbehälters bereitzustellen, wenn das erste Gehäuse relativ zu dem Oberflächenteil des Gasbehälters bewegt wird, um einen ersten im Wesentlichen geschlossenen Raum innerhalb des ersten Gehäuses zu bilden, und
- das zweite Gehäuse (106b) relativ zu einer Stützfläche (109) bewegt werden kann, die verwendet wird, um den Gasbehälter zu stützen, wenn der Gasleckdetektor in Gebrauch ist, um eine zweite im Wesentlichen geschlossene Verbindung zwischen dem zweiten Gehäuse (106b) und der Stützfläche bereitzustellen, wenn das zweite Gehäuse relativ zu der Stützfläche bewegt wird, um einen zweiten im Wesentlichen geschlossenen Raum innerhalb des zweiten Gehäuses zu bilden.

13. Gasleckdetektor nach Anspruch 12, wobei das zweite Gehäuse (106b) einen Luftstromgenerator (160) und ein Detektionsmittel (130, 132) umfasst.

14. Gasleckdetektor nach Anspruch 12 oder 13, wobei das erste Gehäuse zusätzlich zu dem unteren offenen Ende eine verschließbare Öffnung aufweist, um hierdurch die Steuerung einer Freisetzung eines Gaslecks innerhalb des ersten Gehäuses in das zweite Gehäuse und/oder umgekehrt zu ermöglichen.

15. Verfahren zum Detektieren eines Gaslecks, wie zum Beispiel LPG, aus
- einer ersten Art von Gasleck (101) aus einer Gasbehälterventileinheit und/oder
- einer zweiten Art von Gasleck (103) zwischen der Gasbehälterventileinheit und dem Gasbehälter und/oder
- einer dritten Art von Gasleck (105) durch eine Wand oder eine Schweißnaht des Gasbehälters,
wobei der Gasleckdetektor umfasst
- ein Gehäuse (106a, 106b), das relativ zu einer Außenfläche (107, 109) bewegt werden kann, so dass es die Gasbehälterventileinheit (111) zumindest teilweise umgibt, wobei das Gehäuse ein Mittel (124) umfasst, um eine im Wesentlichen geschlossene Verbindung zwischen dem Gehäuse und der Außenfläche bereitzustellen, wenn das Gehäuse relativ zu der Außenfläche bewegt wird, um einen im Wesentlichen geschlossenen Raum innerhalb des Gehäuses zu bilden, und
- ein Detektionsmittel zum Detektieren des ersten und/oder des zweiten Lecks und/oder des dritten Lecks, und das so konfiguriert ist, dass es die Detektion in dem im Wesentlichen geschlossenen Raum in dem Gehäuse bereitstellt, während jegliches Gasleck in dem im Wesentlichen geschlossenen Raum verbleibt, und
- einen Luftstromgenerator (106), wie zum Beispiel ein einzelnes Gebläse, zum Bereitstellen und Bewegen eines Gemischs aus Luft und jeglichem Gasleck innerhalb des im Wesentlichen geschlossenen Raums,
wobei das Verfahren zum Detektieren des Lecks des unter Druck stehenden Gases umfasst
a) Bewegen des Gehäuses relativ zu der Außenfläche (107, 109), um die Gasbehälterventileinheit zumindest teilweise zu umgeben, und
b) Bereitstellen einer im Wesentlichen geschlossenen Verbindung zwischen dem Gehäuse (106a, 106b) und der Außenfläche, wenn das Gehäuse relativ zu der Außenfläche bewegt wird, um einen im Wesentlichen geschlossenen Raum innerhalb des Gehäuses zu bilden, wobei der im Wesentlichen geschlossene Raum ein Raum ist, in den möglicherweise ein Gas hineingedrückt werden kann, aus dem aber im Wesentlichen kein Gas austreten kann oder darf, und
c) Bereitstellen und Bewegen eines Gemischs aus Luft und jeglichem Gasleck innerhalb des im Wesentlichen geschlossenen Raums, und
d) Detektieren des ersten und/oder des zweiten und/oder des dritten Gaslecks mit dem Detektionsmittel, wobei die Detektion in dem im Wesentlichen geschlossenen Raum in dem Gehäuse bereitgestellt wird, während jegliches Gasleck innerhalb des im Wesentlichen geschlossenen Raum verbleibt.

## Revendications

1. Détecteur (102) de fuite de gaz destiné à détecter un parmi
- un premier type de fuite de gaz (101) à partir d'une unité soupape (111) de récipient de gaz (104) et/ou
- un second type de fuite de gaz (103) entre l'unité soupape de récipient de gaz et le récipient de gaz et/ou
- un troisième type de fuite de gaz (105) à travers une paroi ou une soudure du récipient de gaz,
le détecteur de fuite de gaz comprend
- un boîtier (106a, 106b) qui peut être déplacé par rapport à une surface externe (107, 109) de manière à au moins en partie entourer l'unité soupape de récipient de gaz, le boîtier comprenant un moyen (124) destiné à fournir une connexion sensiblement fermée entre le boîtier et la surface externe lorsque le boîtier est déplacé par rapport à la surface externe afin de former un espace sensiblement fermé à l'intérieur du boîtier, l'espace sensiblement fermé étant un espace dans lequel un gaz peut éventuellement être contraint de pénétrer, mais duquel aucun gaz n'est sensiblement autorisé à ou capable de sortir, et
- des moyens de détection (132, 130) destinés à détecter la première et/ou la seconde et/ou la troisième fuite de gaz et configurés de telle façon que la détection est fournie dans l'espace sensiblement fermé dans le boîtier alors que toute fuite de gaz reste à l'intérieur de l'espace sensiblement fermé, et
le détecteur (102) de fuite de gaz comprenant en outre
- un générateur (160) de flux d'air, tel qu'un ventilateur unique, destiné à produire et déplacer un mélange d'air et de toute fuite de gaz à l'intérieur de l'espace sensiblement fermé.

2. Détecteur de fuite de gaz selon la revendication 1, dans lequel le boîtier (106a, 106b) est sensiblement en forme de cloche, et une extrémité inférieure de la cloche est ouverte, et l'extrémité inférieure de la cloche est l'extrémité où le boîtier (106a, 106b) et la surface externe (107, 109) sont déplacés relativement l'un vers l'autre afin de former l'espace sensiblement fermé à l'intérieur du boîtier.

3. Détecteur de fuite de gaz selon la revendication 1, dans lequel la surface externe (109) est une surface de soutien (109) utilisée pour soutenir le récipient de gaz lorsque le détecteur de fuite de gaz est en utilisation ou la surface externe (107) est une partie (107) de surface du récipient de gaz où est disposée l'unité soupape.

4. Détecteur de fuite de gaz selon l'une quelconque des revendications précédentes, dans lequel le générateur (160) de flux d'air comprend un ou plusieurs ventilateurs, chaque ventilateur comportant une ou plusieurs pales de ventilateur.

5. Détecteur de fuite de gaz selon l'une quelconque des revendications précédentes, dans lequel le générateur (160) de flux d'air est adapté pour produire un flux à l'intérieur du boîtier sensiblement fermé, incluant un flux vertical pour déplacer verticalement toute fuite de gaz lorsque le détecteur de fuite de gaz est en utilisation et le boîtier est déplacé par rapport à la surface externe afin de former l'espace sensiblement fermé à l'intérieur du boîtier.

6. Détecteur de fuite de gaz selon l'une quelconque des revendications précédentes, dans lequel le générateur (160) de flux d'air est disposé à l'intérieur du boîtier (106a, 106b).

7. Détecteur de fuite de gaz selon l'une quelconque des revendications précédentes, dans lequel le générateur (160) de flux d'air est disposé au-dessus des moyens de détection (132, 130), lorsque le détecteur de fuite de gaz est en utilisation et le boîtier est déplacé par rapport à la surface externe afin de former l'espace sensiblement fermé à l'intérieur du boîtier.

8. Détecteur de fuite de gaz selon l'une quelconque des revendications précédentes, dans lequel le générateur (160) de flux d'air est conçu pour souffler un mélange d'air et de toute fuite de gaz de manière à faire circuler le mélange d'air et de toute fuite de gaz à l'intérieur de l'espace sensiblement fermé, et de manière que le mélange d'air et de toute fuite de gaz passe sur les moyens de détection (132, 130).

9. Détecteur de fuite de gaz selon l'une quelconque des revendications précédentes, dans lequel le boîtier est doté d'une ou de plusieurs voies de passage menant d'une extrémité inférieure du boîtier et à une extrémité supérieure du boîtier lorsque le détecteur de fuite de gaz est en utilisation et le boîtier est déplacé par rapport à la surface externe de manière à former l'espace sensiblement fermé à l'intérieur du boîtier (106a, 106b).

10. Détecteur de fuite de gaz selon la revendication 9, dans lequel ladite/lesdites une ou plusieurs voies de passage est/sont munie(s) d'un ou de plusieurs tubes sensiblement verticaux dans le boîtier ou d'un ou de plusieurs canaux sensiblement verticaux formés dans le boîtier.

11. Détecteur de fuite de gaz selon la revendication 9, dans lequel ladite/lesdites une ou plusieurs voies de passage est/sont au moins en partie réalisée(s) par un boîtier (106a, 106b) à double paroi, où un espace destiné à fournir un flux guidé est ménagé entre les deux parois (166, 168) du boîtier (106a, 106b) à double paroi.

12. Détecteur de fuite de gaz selon l'une quelconque des revendications précédentes, dans lequel sont disposés deux boîtiers, un premier boîtier relativement petit et un second boîtier plus grand, l'un à l'intérieur de l'autre, dans lequel
- le premier boîtier (106a) peut être déplacé par rapport à une partie (107) de surface du récipient de gaz (104) où l'unité soupape (111) est disposée pour fournir une connexion sensiblement fermée entre le premier boîtier et la partie de surface du récipient de gaz lorsque le premier boîtier est déplacé par rapport à la partie de surface du récipient de gaz afin de former un premier espace sensiblement fermé à l'intérieur du premier boîtier, et
- le second boîtier (106b) peut être déplacé par rapport à une surface de soutien (109) utilisée pour soutenir le récipient de gaz lorsque le détecteur de fuite de gaz est en utilisation afin de fournir une seconde connexion sensiblement fermée entre le second boîtier (106b) et la surface de soutien lorsque le second boîtier est déplacé par rapport à la surface de soutien afin de former un second espace sensiblement fermé à l'intérieur du second boîtier.

13. Détecteur de fuite de gaz selon la revendication 12, dans lequel le second boîtier (106b) comprend un générateur (160) de flux d'air et des moyens de détection (130, 132).

14. Détecteur de fuite de gaz selon la revendication 12 ou 13, dans lequel le premier boîtier comprend une ouverture pouvant être fermée, en plus de l'extrémité ouverte inférieure, de manière à permettre ainsi le contrôle d'une libération de toute fuite de gaz à l'intérieur du premier boîtier dans le second boîtier et/ou vice versa.

15. Procédé de détection d'une fuite d'un gaz, tel que du GPL parmi
- un premier type de fuite de gaz (101) à partir d'une unité soupape de récipient de gaz et/ou
- un second type de fuite de gaz (103) entre l'unité soupape de récipient de gaz et le récipient de gaz et/ou
- un troisième type de fuite de gaz (105) à travers une paroi ou une soudure du récipient de gaz,
dans lequel le détecteur de fuite de gaz comprend
- un boîtier (106a, 106b) qui peut être déplacé par rapport à une surface externe (107, 109) de manière à au moins en partie entourer l'unité soupape (111) de récipient de gaz, le boîtier comprenant un moyen (124) destiné à fournir une connexion sensiblement fermée entre le boîtier et la surface externe lorsque le boîtier est déplacé par rapport à la surface externe afin de former un espace sensiblement fermé à l'intérieur du boîtier, et
- des moyens de détection destinés à détecter la première et/ou la seconde fuite et/ou la troisième fuite et configurés de telle façon que la détection est fournie dans l'espace sensiblement fermé dans le boîtier alors que toute fuite de gaz reste à l'intérieur de l'espace sensiblement fermé, et
- un générateur (106) de flux d'air, tel qu'un ventilateur unique, destiné à produire et déplacer un mélange d'air et de toute fuite de gaz à l'intérieur de l'espace sensiblement fermé,
le procédé de détection de la fuite du gaz comprimé, comprenant les étapes consistant à
a) déplacer le boîtier par rapport à la surface externe (107, 109) de manière à au moins en partie entourer l'unité soupape de récipient de gaz, et
b) fournir une connexion sensiblement fermée entre le boîtier (106a, 106b) et la surface externe lorsque le boîtier est déplacé par rapport à la surface externe afin de former un espace sensiblement fermé à l'intérieur du boîtier, l'espace sensiblement fermé étant un espace dans lequel un gaz peut éventuellement être contraint de pénétrer, mais duquel aucun gaz n'est sensiblement autorisé à ou capable de sortir, et
c) produire et déplacer un mélange d'air et de toute fuite de gaz à l'intérieur de l'espace sensiblement fermé, et
d) détecter la première et/ou la seconde et/ou la troisième fuite de gaz à l'aide des moyens de détection, la détection étant réalisée dans l'espace sensiblement fermé dans le boîtier alors que toute fuite de gaz reste à l'intérieur de l'espace sensiblement fermé.
